# EUROPÄISCHE PATENTANMELDUNG

(11) **EP 3 617 289 A1**
(43) Veröffentlichungstag der Anmeldung: **04.03.2020**
(21) Anmeldenummer: 18190989.6
(22) Anmeldetag: 27.08.2018
(51) Int. Cl.: C09K 8/68, C09K 8/84, C09K 8/88, C09K 8/90, C08B 37/00

(54) **VERFAHREN ZUM HYDRAULISCHEN FRACTURING UNTERIRDISCHER, ÖL- UND/ODER GASFÜHRENDER FORMATIONEN**

(71) Anmelder: BASF SE, 67056 Ludwigshafen am Rhein (DE)
(72) Erfinder: Keller, Harald, Dr., 67056 Ludwigshafen (DE); Gottschling, Ingo, 67056 Ludwigshafen (DE); Ranft, Meik, Dr., 67056 Ludwigshafen (DE); Bohres, Edward, Dr., 67056 Ludwigshafen (DE); Helwig, Ekaterina, Dr., 67056 Ludwigshafen (DE)
(74) Vertreter: BASF IP Association

(57) **Zusammenfassung**

Verfahren zum hydraulischen Fracturing unterirdischer, öl- und/oder gasführender Formationen, bei dem man ein wässriges Fracturing-Fluid einsetzt umfassend mindestens Galactomannane, Proppants, sowie Oxidationsmittel, welche die Galactomannane zu Carbonylgruppen aufweisenden Galactomannanen oxidieren, wobei sich die Viskosität des wässrigen Fracturing-Fluids im Zuge der Oxidation erhöht.

## Beschreibung

Die Erfindung betrifft ein Verfahren zum hydraulischen Fracturing unterirdischer, öl- und/oder gasführender Formationen, bei dem man ein wässriges Fracturing-Fluid einsetzt umfassend mindestens Galactomannane, Proppants, sowie Oxidationsmittel, welche die Galactomannane zu Carbonylgruppen aufweisenden Galactomannanen oxidieren, wobei sich die Viskosität des wässrigen Fracturing-Fluids im Zuge der Oxidation erhöht.

Hydraulisches Fracturing von unterirdischen, öl- und/oder gasführenden Formationen ist prinzipiell bekannt. Es handelt sich um eine Verfahren, mit dem die Produktion von Erdöl und/oder Erdgas aus unterirdischen Formation erhöht oder überhaupt erst ermöglicht wird.

Beim hydraulischen Fracturing wird eine geeignete Formulierung durch ein Bohrloch in die unterirdische Formation injiziert, und zwar unter einem solch hohen Druck, so dass die Formation aufgebrochen wird und neue Risse oder Spalten in der Formation erzeugt und/oder existierende Risse oder Spalten in der Formation aufgeweitet und verlängert werden. Durch die neu gebildeten Risse oder Spalten können Erdöl und/oder Erdgas leichter zum Bohrloch strömen und gefördert werden, wodurch die besagte Produktionserhöhung erreicht wird. Formulierungen zum hydraulischen Fracturing umfassen typischerweise Wasser, verdickende Komponenten und Proppants. Proppants sind kleine, harte Partikel, z.B. Sandkörner, die von der wässrigen Formulierung in die gebildeten Risse oder Spalten gefördert werden. Sie verhindern, dass sich die Risse oder Spalten beim Wegfall des Drucks wieder schließen.

Einen Überblick über Formulierungen zum Fracturing geben beispielsweise Reza Barati und Jenn-Tai Liang in "A Review of Fracturing Fluid Systems used for Hydraulic Fracturing of Oil and Gas Wells", J. Appl. Polym. Sci. 2014, DOI: 10.1002/APP.407335. Weit verbreitete Formulierungen zum Fracturing umfassen beispielsweise Wasser, Guar als verdickendes Polymer, Vernetzer und Proppants. Guar und die Vernetzer bilden zusammen ein hochviskoses Gel. Als Vernetzer können beispielsweise Bor-Verbindungen wie Borax oder Borsäure oder mehrwertige Metallionen wie Ti(IV)-, Zr(IV)- oder AI(III)-Ionen verwendet werden.

Fracturing ist in vielen Ländern hoch umstritten, und es gibt eine hohe Nachfrage nach "grünen Fracturing-Fluiden". Es gibt insbesondere Vorbehalte gegen die Verwendung von Boraten als Vernetzern, und daher werden Alternativen zu Boraten gesucht.

WO 2017/220391 A1 offenbart ein Verfahren zum Fracturing, bei dem man bestimmte Schichtsilikate anstelle von Boraten als Vernetzer einsetzt.

Guar ist ein Polysaccharid aus der Klasse der Galactomannane und umfasst eine Hauptkette aus Mannose-Einheiten sowie seitenständige Galactose-Einheiten. Ebenso sind modifizierte Guar-Varianten bekannt, wie beispielsweise Hydroxypropylguar oder Carboxymethyl-hydroxypropylguar. Weiterhin ist es bekannt, Guar zu oxidieren.

US 2005/0121159 A1 offenbart ein Verfahren zur Oxidation von Hydroxyverbindungen umfassend das Oxidieren einer protonierten Hydroxylaminverbindung zur entsprechenden Nitrosoniumverbindung und Oxidieren einer Hydoxyverbindung mittels der Nitrosoniumverbindung. Bei der Hydroxyverbindung kann es sich auch um Oligo- oder Polysacharide, wie beispielsweise Stärke oder Cellulose handeln. Bei der Hydroxylaminverbindung kann es sich beispielsweise um Tetramethylpiperidinyl-N-oxyl (TEMPO) handeln.

US 2001/0034442 A1 offenbart ein Verfahren zum Oxidieren von Polysacchariden in wässrigen Lösungen unter Verwendung von Hypochlorit in Gegenwart von katalytischen Mengen einer Nitroxylverbindung (beispielsweise TEMPO) bei einem pH-Wert zwischen 7 und 9,3 und einer Temperatur von 15°C bis 25°C, wobei keine Bromid-Katalysatoren anwesend sind. Bei den Polysacchariden kann es sich beispielsweise um Galactomannane wie Guar handeln. Je nach Menge von Hypochlorit entsteht ein Gemisch aus 6-Aldehyd- und 6-Carboxyderivaten oder nur die 6-Carboxyderivate.

WO 2001/034657 A1 offenbart ein Verfahren zum Oxidieren von primären und/oder sekundären Alkoholen in Gegenwart von Di-tertiären-alkylnitroxylen bei einem pH-Wert von weniger als 7. Als Oxidationsmittel kann Hypochlorit eingesetzt werden und als Katalysator TEMPO. Bei den primären und/oder sekundären Alkoholen kann es sich um Polysaccharide, beispielsweise um Guar handeln. Die Produkte der Reaktion umfassen, je nach den Reaktionsbedingungen, Carbaldehyd- und/oder Carboxygruppen.

US 2003/0208062 A1, US 2003/0209336 A1 und EP 1 077 221 A1 offenbaren je ein Beispiel zur Herstellung Aldehyd-derivatisierten Guars. Eine wässrige Lösung von Guar wird mit Natriumhypochlorit in Gegenwart von 4-Acetamido-TEMPO und NaBr bei pH 9,5 oxidiert. Es wird ein Guar umfassend Aldehyd- und Carboxygruppen erhalten, und zwar beträgt der Gehalt 5,6 mol % Aldehydgruppen und 5,6 mol % Carboxygruppen pro Zuckereinheit in Guar.

L. Merlini et al. "Enzymatic and chemical oxidation of polygalactomannans from seeds of a few species of leguminous plants and chracterization of the oxidized products", Journal of Biotechnology 198 (2015) 31 - 43 beschreiben die enzymatische Oxidation von Galatomannanen mit Laccase/TEMPO und die chemische Oxidation mit NaClO/NaBr/TEMPO. Der pH-Wert wird während des gesamten Oxidationsvorgangs auf pH 9,3 gehalten. Bei der enzymatischen Oxidation werden stabile Gele gebildet. Bei der chemischen Oxidation werden zunächst Gele gebildet, dann aber nimmt die Viskosität stark ab und erreicht niedrigere Werte als zu Beginn. Die Autoren erklären den gefundenen Effekt so, dass bei der enzymatischen Oxidation mit Laccase die primären OH-Gruppen zu Aldehyd-Gruppen oxidiert werden, welche mit den OH-Gruppen anderer Zuckereinheiten Halbacetale bilden können, d.h. die Galactomannane vernetzen, während bei der chemischen Oxidation nur intermedär Aldehyd-Gruppen gebildet werden, gefolgt von rascher Oxidation zu Carboxylgruppen, welche nicht vernetzen.

Aufgabe der Erfindung war es, ein verbessertes Verfahren zum hydraulischen Fracturing unterirdischer, öl- und/oder gasführender Formationen bereit zu stellen, bei dem der Einsatz von Borverbindungen zum Vernetzen vermieden werden kann.

Dementsprechend wurde ein Verfahren zum Fracturing unterirdischer, öl- und/oder gasführender Formationen gefunden, umfassend das Injizieren eines wässrigen Fracturing-Fluids umfassend mindestens ein Galactomannan sowie Proppants durch ein Bohrloch in die Formation, wobei das wässrige Fracturing-Fluid unter einem Druck injiziert wird, der ausreichend ist, um die Formation aufzubrechen und neue Risse in der Formation zu erzeugen und/oder existierende Risse in der Formation zu vergrößern und/oder zu verlängern, wobei das wässrige Fracturing-Fluid mindestens
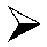 0,1 bis 2 Gew. % mindestens eines Galactomannans,
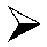 Proppants, sowie
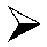 Oxidationsmittel, welche die Galactomannane zu Carbonylgruppen aufweisenden Galactomannanen oxidieren können, umfasst,
und wobei sich die Menge an Galactomannanen auf die Summe aller Komponenten des wässrigen Fracturing-Fluids mit Ausnahme der Proppants bezieht, und wobei sich die Viskosität des wässrigen Fracturing-Fluids im Zuge der Oxidation erhöht.

Zu der Erfindung ist im Einzelnen das Folgende auszuführen:
Für das Verfahren zum Fracturing unterirdischer, öl- und/oder gasführender Formationen wird ein wässriges Fracturing-Fluid eingesetzt, mindestens umfassend ein Galactomannan,
Proppants sowie Oxidationsmittel. Die Oxidationsmittel oxidieren zumindest einen Teil der Galactomannane zu Carbonylgruppen umfasssenden Galactomannanen.

In einem zweiten Schritt wird das Fracturing-Fluid durch mindestens ein Bohrloch in die Formation injiziert, und zwar unter einem solchen Druck, so dass die Formation aufgebrochen wird und neue Risse in der Formation zu erzeugt und/oder existierende Risse in der Formation zu vergrößert und/oder zu verlängert werden.

Die Oxidation kann vor, während oder nach dem Injizieren des Fracturing-Fluids in die unterirdische Formation erfolgen. Durch die Oxidation erhöht sich die Viskosität des wässrigen Fracturing-Fluids, und es können sich sogar hochviskose Gele bilden. Eine derartige Erhöhung der Viskosität von Fracturing-Fluiden dient dem Zweck, den Transport der Proppants (welche in der Regel eine deutliche höhere Dichte aufweisen als Wasser) in die Formation zu erleichtern oder überhaupt erst zu ermöglichen. Der Zusatz zusätzlicher Vernetzer, wie beispielsweise von Borverbindungen, ist zur Gelbildung nicht erforderlich. Ohne dass wir auf eine Theorie festgelegt werden wollen, scheint der Effekt der Oxidationsmittel darauf zu beruhen, dass sich Carbonylgruppen bilden, und die Carbonylgruppen -wie in der Literatur beschrieben- mit OH-Gruppen anderer Zucker Halb- oder Vollacetale bzw. Halb- oder Vollketale bilden können, welche Galactomannan-Ketten miteinander vernetzt. Es handelt sich also um ein selbstvernetzendes System zur Bildung von Galactomannan-Gelen.

### Galacatomannane

Galactomannane sind prinzipiell bekannt. Es handelt sich hierbei um natürlich vorkommende Polysacharide mit einer Hauptkette aus Mannose-Einheiten sowie Galactose-Einheiten umfassende Seitenketten. Das Verhältnis von Mannose zu Galactose kann, 1,0 bis 5,0 betragen, insbesondere 1,5 bis 3,5 betragen, insbesondere 1,5 bis 2, beispielsweise 1,6 bis 1,8. Die Galactose-Einheiten können regelmäßig oder statistisch mit der Hauptkette verknüpft sein. Das zahlenmittlere Molekulargewicht Mₙ kann 80000 g/mol bis mehr als 300000 g/mol betragen.

Galactomannane weisen primäre OH-Gruppen -CH₂OH in 6-Stellung und sekundäre OH-Gruppen in 2,3 und 4-Stellung auf. Diese können zu Aldehyd- bzw. Keto-Gruppen oxidiert werden.

Beispiele von Galactomannanen umfassen Guargummi oder kurz Guar. Weitere Beispiele umfassen Johannisbrotkernmehl (locust bean gum), Tarakernmehl (tara gum), Sesbania Gummi (sesbania gum), fenugreek gum oder cassia gum.

Der Begriff "Galactomannane" soll auch modifizierte Galactomannanen umfassen. Beispiele sind die Hydroxyethyl-, Hydroxypropyl-, Hydroxybutyl- und Carboxymethyl-Derivate sowie auch die gemischten Derivate der oben genannten Galactomannane, insbesondere von Guar. Im Regelfalle sind nicht mehr als 30 mol % der OH-Gruppen unmodifizierter Galactomannane modifiziert, ohne dass die Erfindung darauf beschränkt sein soll.

Beispiele bevorzugter Derivate umfassen Hydroxyethylguar, Hydroxypropylguar, Hydroxybutylguar, Carboxymethylguar, Carboxymethylhydroxyethylguar and Carboxymethylhydroxypropylguar.

Selbstverständlich können auch Mischungen verschiedener, derivatisierter oder nicht derivatisierter Galactomannane verwendet werden. Bevorzugt werden zur Ausführung der Erfindung Guar und Hydroxypropylguar eingesetzt.

Erfindungsgemäß beträgt die Konzentration der Galactomannane in der wässrigen Formulierung zum Injizieren 0,1 bis 2 Gew.-% bezüglich der Summe aller Komponenten des Fracturing-Fluids mit Ausnahme der Proppants, insbesondere 0,2 bis 1,5 Gew.-%, bevorzugt 0,3 Gew.-% bis 1 Gew.-%, besonders bevorzugt 0,3 bis 0,7 Gew.-% und beispielsweise 0,4 bis 0,6 Gew.-%.

### Oxidationsmittel

Für das erfindungsgemäße Verfahren können prinzipiell alle Oxidationsmittel eingesetzt werden, welche in der Lage sind, unter den gewählten Bedingungen Galactomannane selektiv zu Carbonylgruppen umfassenden Galactomannanen zu oxidieren. Es müssen hierbei nicht alle primären oder sekundären OH-Gruppen der Galactomannane zu Aldehyd- bzw. Ketogruppen oxidiert werden, und es können auch einige Gruppen weiter zu Carboxylgruppen oxidiert werden, sofern nur eine ausreichende Menge an Carbonylgruppen vorhanden ist, um Gelbildung durch Selbstvernetzung zu bewirken.

Beispiele geeigneter Oxidationsmittel umfassen Perjodate, zum Beispiel Natriumperjodat, Wasserstoffperoxid, Wasserstoffperoxid mit Kupfersalzen wie beispielsweise CuSO₄, sowie Jod in Kombination mit Ni(NO₃)₂ oder Fe(NO₃)₃.

Die Menge an Oxidationsmittel wird vom Fachmann so bemessen, dass sich im Zuge der Oxidation die Viskosität des Fracturing-Fluids erhöht und sich im bevorzugt hochviskose Gele bilden. Im Regelfalle ist hierzu -abhängig von der Art der oxidierenden Komponenten- eine gewisse Mindestmenge erforderlich. Eine zu hohe Menge kann auch dazu führen, dass keine Gele mehr gebildet werden. Der Fachmann kann die optimale Menge gegebenenfalls mit wenigen Versuchen ermitteln.

In einer Ausführungsform der Erfindung handelt es sich bei den Oxidationsmitteln um eine Kombination umfassend mindestens ein Hypohalogenit, bevorzugt Hypochlorit sowie Di-t-alkylnitroxylradikale.

Die Di-t-alkylnitroxylradikale weisen die allgemeine Formel (I) oder (II) 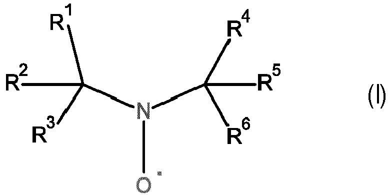 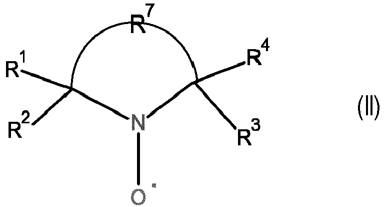 auf. Hierbei stehen die Gruppen R¹, R², R³, R⁴, R⁵ und R⁶ unabhängig voneinander für C₁- bis C₁₂-Alkylgruppen, insbesondere C₁- bis C₄-Alkylgruppen, bevorzugt Methyl- oder Ethylgruppen und besonders bevorzugt für Methylgruppen. R⁷ steht für eine Alkylengruppe mit 2 bis 4 Kohlenstoffatomen, welche auch substituiert sein kann. Bei Alkylengruppen mit 3 oder 4 Kohlenstoffatomen können nicht benachbarte Kohlenstoffatome auch die Sauerstoffatome und/oder Stickstoffatome ersetzt sein. Beispiele für Substituenten umfassen Alkyl-, Alkoxy-, Hydroxyl-, Amino- oder Amidogruppen.

In einer Ausführungsform der Erfindung handelt es sich bei den Di-t-alkylnitroxylradikalen um eine Verbindung (III)

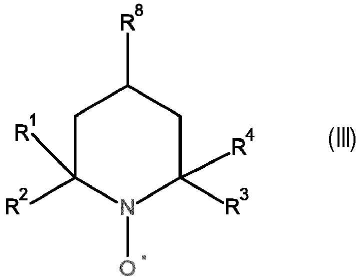

In der Formel (III) haben R¹, R², R³ und R⁴ die obige Bedeutung und stehen bevorzugt für Methylgruppen. R⁸ steht für H, eine lineare oder verzweigte Alkylgruppe mit 1 bis 12, bevorzugt 1 bis 4 Kohlenstoffatomen, -OH, -OR⁹ wobei R⁹ für eine lineare oder verzweigte Alkylgruppe mit 1 bis 12, bevorzugt 1 bis 4 Kohlenstoffatomen steht, -NH₂, -NHR⁹, -NR⁹ oder-NH-C(=O)-CH₃.

Bevorzugt handelt es sich um eine Verbindung ausgewählt aus der Gruppe von 2,2,6,6-Tetramethylpiperidinyloxyl (im Folgenden abgekürzt als "TEMPO"), 4-Acetamido-TEMPO, 4-Methoxy-TEMPO oder 4-Hydroxy-TEMPO, besonders bevorzugt um 4-Hydroxy-TEMPO.

Anstelle der Di-t-alkylnitroxylradikalen können auch die entsprechenden Oxonium-Kationen der allgemeinen Formeln (IV), (V), and (VI) eingesetzt werden, wobei die Gruppen R¹, R², R³, R⁴, R⁵, R⁶, R⁷ und R⁸ die oben geschilderte Bedeutung haben.

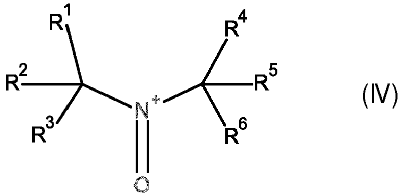

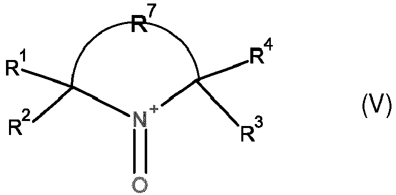

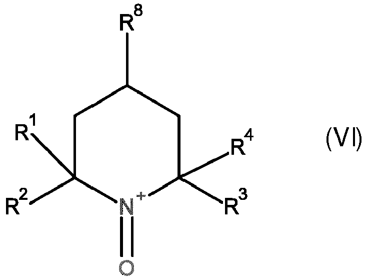

Weiterhin können auch die Vorstufen der Di-t-alkylnitroxylradikale, und zwar die entsprechenden Amine bzw. Hydroxylamine eingesetzt werden, welche *in situ* zu Di-t-alkylnitroxylradikalen oxidiert werden können.

In Kombination mit den Di-t-alkylnitroxylradikale können grundsätzlich alle Oxidationsmittel eingesetzt werden, welche in Gegenwart von Di-t-alkylnitroxylradikalen Galactomannane zu Carbonylgruppen umfassenden Galactomannanen oxidieren können. Ohne auf eine Theorie festgelegt werden zu wollen, werden dabei offensichtlich die Nitroxylradikale durch das Oxidationsmittel zu Oxoammonium-Gruppen >N⁺=O oxidiert, welcher ihrerseits die Galactomannane oxidieren.

Beispiele geeigneter Oxidationsmittel umfassen Hypohalogenite wie zum Beispiel Hypochlorite oder Hypobromite sowie Chlor oder Brom. Besonders vorteilhaft können Hypohalogenite. Insbesondere können Alkalimetallhypochlorite eingesetzt werden, wie beispielsweise Natriumhypochlorit oder Kaliumhypochlorit.

Die Oxidation mit Hypohalogeniten und Di-t-alkylnitroxylradikalen nimmt man erfindungsgemäß vor, indem man eine wässrige Lösung der Galactomannane mit Hypohalogeniten, bevorzugt Alkalimetallhypohalogeniten und Di-t-alkylnitroxylradikalen, bevorzugt wässrigen Lösungen davon vermischt.

Lösungen von Alkalimetallhypohalogeniten sind alkalisch und dementsprechend ist auf der pH-Wert der Galactomannan-Lösung zunächst alkalisch. Er fällte dann aber im Zuge der Oxidation sehr schnell.

Erfindungsgemäß erfolgt die Oxidation mit Alkalimetallhypohalogeniten mit der Maßgabe, dass der pH-Wert im Zuge der Oxidation auf Werte unter 7 fallen sollte, bevorzugt weniger als 6,5, insbesondere auf Werte von 2 bis weniger als 7, bevorzugt 2 bis 6,5, besonders bevorzugt 3 bis 6 und beispielsweise 4 bis 6. Optional kann der pH-Wert auch auf die besagten Werte eingestellt werden.

Die Mengen der oxidierenden Komponenten werden auf AGUs bezogen.

Der Begriff "AGU" (englisch: anhydro-glucose-unit) im Sinne dieser Erfindung sind die Monosaccharideinheiten aus denen die Galactomannane wie beispielsweise Guar aufgebaut sind. Diese Monosaccharideinheiten sind Mannose- oder Galactose-Einheiten, die in Galactomannen im statistischen Mittelwert eine molekulare Masse von 162 g/mol aufweisen.

Erfindungsgemäß beträgt die Menge der Hypohalogenite in der wässrigen Formulierung mindestens 5 mol-%, bevorzugt mindestens 10 mol-% bezüglich der AGU, insbesondere 5 mol-% bis 150 mol-%, bevorzugt 10 mol-% bis 40 mol-% bezüglich der AGU.

Erfindungsgemäß beträgt die Menge der Menge der Di-t-alkylnitroxylradikale bevorzugt mindestens 1 mol-% bzgl. AGU, insbesondere 0,5 mol-% bis 50 mol-%, bevorzugt 1,0 mol-% bis 30 mol-%.

Die optimale Menge an Hypohalogeniden sowie Di-t-alkylnitroxylradikalen kann auch noch von der Menge an Galaktomannanen, im Fracturig-Fluid enthaltenen Salzen oder weiteren Komponenten abhängen.

In einer Ausführungsform der Erfindung handelt es sich bei den oxidierenden Komponenten um eine Kombination aus 4-Hydroxy-2,2,6,6-Tetramethylpiperidinyloxyl (4-Hydrox-TEMPO) und Natriumhypochlorit.

In einer Ausführungsform der Erfindung handelt es sich bei den oxidierenden Komponenten um eine Kombination aus 4-Hydrox-TEMPO, Natriumhypochlorit und NaBr.

In einer Ausführungsform der Erfindung handelt es sich bei den oxidierenden Komponenten um eine Kombination aus 4-Hydrox-TEMPO, Natriumhypochlorit und KCl und/oder NaCl.

In einer weiteren Ausführungsform der Erfindung handelt es sich bei den oxidierenden Komponenten um eine Kombination aus TEMPO, Natriumhypochlorit und KCl.

In einer weiteren Ausführungsform der Erfindung handelt es sich bei den oxidierenden Komponenten um eine Kombination aus Enzymen wie Laccase oder Galactooxidase, Sauerstoff und TEMPO bzw. Tempo-Derivaten.

### Proppants

Die wässrige Formulierung zum Injiziieren umfasst weiterhin in prinzipiell bekannter Art und Weise mindestens ein Proppant, welche in der wässrigen Formulierung suspendiert ist.

Proppants oder Stützmittel sind kleine, harte Partikel, welche bewirken, dass sich im Zuge des Fracturings gebildete Risse oder Spalten nicht schließen können, wenn der Druck nicht mehr angewandt wird. Die Proppants können eine Partikelgröße von 0,1 bis 2 mm, beispielsweise von 0,2 mm bis 1 mm aufweisen.

Beispiele von Proppants umfassen natürlich vorkommende Sandkörner, beschichtete Sandkörner oder künstlich hergestellte Partikel, wie beispielsweise keramische Partikel, Glaspartikel oder Partikel aus Polymeren. Auch natürliche Materialien, wie beispielsweise Stück von Nussschalen können eingesetzt werden.

### Beschichtung

Die Menge von Proppants in der wässrigen Zusammensetzung zum Injizieren kann von 50 kg/m³ bis 3500 kg/m³ der wässrigen Zusammensetzung, beispielsweise von 50 kg/m³ to 1200 kg/m³ betragen.

### Weitere Komponenten

Optional kann die wässrige Formulierung zum Injizieren noch weitere Komponenten umfassen. Beispiele weiterer Komponenten umfassen Biozide, Puffer, Tonstabilisatoren, Korrosionsinhibitoren, Fasern, Entschäumer, Belagsinhibitoren, Breaker, Sauerstofffänger oder Tenside.

In einer Ausführungsform der Erfindung umfasst die wässrige Formulierung mindestens ein Salz, bevorzugt mindestens ein Alkalimetallsalz, beispielsweise NaCl oder KCl. KCl kann insbesondere eingesetzt werden, um bei tonhaltigen Formationen das Quellen von Tonen zu vermeiden oder zumindest zu verringern.

In einer Ausführungsform der Erfindung umfasst die wässrige Formulierung mindestens ein nichtionisches Tensid der allgemeinen Formel R¹⁰(OCH₂CH₂)ₓOH, wobei R¹⁰ für einen oder mehrere verschiedene lineare Alkylreste mit 8 bis 18 Kohlenstoffatomen steht und x für eine Zahl von 2 bis 30. Überraschenderweise kann die Zugabe eines solchen Tensids die Gelbildung verbessern. Ohne auf eine Theorie festgelegt werden zu wollen, scheint es so zu sein, dass auch die primären OH-Gruppen derartiger Tenside zu Aldehydgruppen oxidiert werden, die anschließend Halb- oder Vollacetale mit OH-Gruppen von Galactomannanen bilden können. Auf diese Art und Weise entstehen mit hydrophoben Gruppen modifizierte Galactomannane. In wässriger Lösung können die hydrophoben Gruppen verschiedener Galactomannan-Ketten miteinander assoziieren und somit die Vernetzung erhöhen. In einer Ausführungsform der Erfindung steht R¹⁰ für einen oder mehrere verschiedene lineare Alkylreste mit 16 bis 18 Kohlenstoffatomen und x für eine Zahl von 10 bis 30, insbesondere 10 bis 20.

In einer Ausführungsform der Erfindung setzt man die genannten Tenside in Kombination mit 4-Hydroxy-TEMPO sowie NaOCl ein.

In einer weiteren Ausführungsform umfasst die wässrige Formulierung zusätzlich mindestens einen verzögerten Breaker. Der Begriff "verzögerte Breaker" steht für Substanzen, welche in der Lage sind, die Viskosität der Gele nach dem Fracturing wieder abzubauen, beispielsweise durch Spalten der Polymerkette oder oxidativen Abbau der Polymerkette, wobei die Wirkung erst mit einer gewissen Zeitverzögerung eintritt. Eine verzögerte Wirkung kann erreicht werden, indem man den Breaker verkapselt, welche sich erst nach einiger Zeit und/oder unter Formationsbedingungen öffnet oder indem man den Breaker in eine Matrix einbettet aus der er erst nach einiger Zeit und/oder unter Formationsbedingungen freigesetzt wird. Bei Breakern kann es sich beispielsweise um Oxidationsmittel, Enzyme, Säuren oder Basen handeln.

In einer weiteren Ausführungsform umfasst die wässrige Formulierung zusätzlich mindestens einen Demulgator.

### Verfahren zum Fracturing

Als Basis für das wässrige Fracturing-Fluid dient eine Wasser enthaltende Basis-Flüssigkeit. Sie kann neben Wasser noch mit Wasser mischbare organische Lösemittel umfassen, wobei der Wassergehalt mindestens 60 Gew. %, bevorzugt mindestens 85 Gew. % und insbesondere mindestens 95 Gew. % bezüglich der Menge aller Lösemittel einschließlich Wasser betragen sollte. Besonders bevorzugt handelt es sich ausschließlich um Wasser. Es kann sich um Frischwasser oder auch um salzhaltiges Wasser, beispielweise Meerwasser oder Formationswasser oder um Mischungen davon handeln.

Zur Durchführung des erfindungsgemäßen Verfahrens zum Fracturing unterirdischer, öl- und/oder gasführender Formationen wird zunächst das beschriebene wässrige Fracturing-Fluid hergestellt. Die Herstellung kann durch Vermischen der Basis-Flüssigkeit mit allen Komponenten des Fracturing-Fluids erfolgen.

Bevorzugt werden zunächst die Galactomannane in der wässrigen Basis-Flüssigkeit, bevorzugt Wasser gelöst, und die weiteren Komponenten danach zugegeben.

Die Oxidationsmittel werden bevorzugt erst unmittelbar vor dem Injizieren des Fracturing-Fluids in mindestens ein Bohrloch zugegeben. Auf diese Art und Weise wird erreicht, dass die Oxidation der Galactomannane und die damit verbundene Bildung von Galactomannan-Gelen erst während des Abwärtsströmens der wässrigen Formulierung durch das Bohrloch erfolgt und nicht bereits an der Oberfläche.

Zum Lösen der Galactomannane können feste Galactomannane in der wässrigen Basis-Flüssigkeit gelöst werden, beispielsweise in einem Lösetank. Die wässrige Lösung kann anschließend in prinzipiell bekannter Art und Weise mittels Pumpen (typischerweise einer Vielzahl von Pumpen) zum Bohrloch transportiert werden. Proppants und oxidierende Komponenten können direkt in die Leitung eindosiert werden, die oxidierenden Komponenten bevorzugt als wässrige Lösungen.

Hypohalogenite und Di-t-alkylnitroxylradikale kann man gemeinsam zugeben oder bevorzugt zunächst eine wässrige Lösung der Di-t-alkylnitroxylradikale und erst unmittelbar vor dem Bohrloch eine wässrige Lösung der Hypohalogenite, wie beispielsweise einer wässrigen Lösung von Alkalimetallhypochloriten.

In einer weiteren Ausführungsform der Erfindung kann man eine Dispersion von Galactomannanen in einem Öl einsetzen.

Als Öle geeignet sind Flüssigkeiten, in denen die Galactomannane dispergierbar sind, aber nicht quellen oder verklumpen. Ohne die Öle auf die genannten Beispiele beschränken zu wollen sind geeignete Öle flüssige Kohlenwasserstoffe, zum Beispiel Paraffinöle, Kerosin, Diesel. Vorteilhaft sind biologisch abbaubare Öle, zum Beispiel Pflanzenöle (Rapsöl, Sonnenblumenöl), Polyethylenglykole oder Ester von organischen Säuren mit Alkoholen wie beispielsweise Zitronensäureester oder Milchsäureester. Der Gehalt der Galactomannane im Öl beträgt 10 bis 80 Gew.-%, bevorzugt 20 bis 60 Gew.-%, besonders bevorzugt 30 bis 50 Gew.-%. Die Dispersion in Öl kann auch bereits Di-t-alkylnitroxylradikale umfassen.

Die Dispersion kann vorteilhaft direkt in die Fracking-Leitung eindosiert werden, wobei die Galactomannane in der strömenden Basis-Flüssigkeit gelöst werden. Diese Vorgehensweise ist vor allem für Offshore-Anwendungen sinnvoll, weil auf Plattformen häufig kein ausreichender Platz für Lösestationen ist. Die Hypohalogenite können als wässrige Lösung unmittelbar vor dem Injizieren in das Bohrloch zugegeben werden.

### Verfahren zum Herstellen von Gelen

In einem weiteren Aspekt betrifft die vorliegende Erfindung ein Verfahren zum Herstellung von Galactomannan-Gelen umfassend mindestens die folgenden Schritte
- Bereitstellen eines wässrigen Fluids umfassend mindestens eine wässrige Basis-Flüssigkeit und 0,1 bis 2 Gew. % mindestens eines Galactomannans, bezogen auf die Summe aller Komponenten des wässrigen Fluids,
- Zugabe eines Oxidationsmittels, welches die Galactomannane zu Carbonylgruppen aufweisenden Galactomannanen oxidieren kann, umfassend eine Kombination umfassend mindestens ein Hypochlorit und Di-t-alkylnitroxylradikale, mit der Maßgabe, dass der pH-Wert des wässrigen Fracturing-Fluids nach der Oxidation weniger als 7 beträgt, bevorzugt 2 bis 6,5.
Bevorzugte Ausführungsformen des Oxidationsmittels und bevorzugte Reaktionsbedingungen wurden bereits oben genannt, und wir verweisen auf diese Ausführungen. Weitere Komponenten des Gels wurden ebenfalls oben genannt, und wir verweisen auf diese Ausführungen.

Derartige Gele können für verschiedenste Zwecke verwendet werden, z.B. für kosmetische Anwendungen, zur Herstellung von Wasch- und Reinigungsmitteln, von Papier oder Farben und Lacken.

### Vorteile der vorliegenden Erfindung

Das vorliegende Verfahren zum Fracturing hat den Vorteil, dass keine Borverbindungen oder Schwermetalle zur Vernetzung der Galactomannane eingesetzt werden müssen. Die Verwendung derartiger Komponenten ist in vielen Ländern hoch umstritten, und die Erfindung stellt eine Möglichkeit zum Vermeiden derartiger Komponenten dar.

### Beispiele

Die folgenden Beispiele sollen die Erfindung näher illustrieren:

**Verwendete Materialien:**

| Guar | Sigma Aldrich, ohne Aufreinigung verwendet |
|---|---|
| TEMPO | 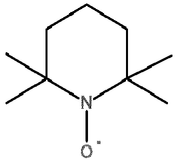 |
| 4-Hydroxy-TEMPO | 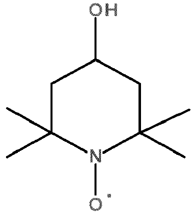 |
| 4-Acetamido-TEMPO | 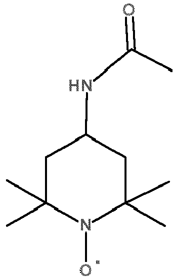 |
| 4-Amino-TEMPO | 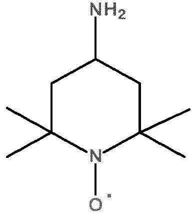 |
| 4-Methoxy-TEM PO | 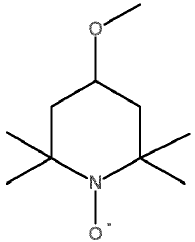 |
| 4-Oxo-TEMPO | 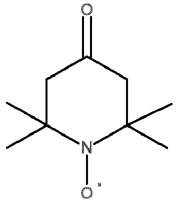 |
| Hydoxypropylguar (HPG) | Lambertii (Biogel HPG) |
| Natriumhypochlorit | Eingesetzt als wäßrige Lösung, Aktivchlorgehalt wurde bestimmt |

### Herstellung der Galactomannan-Lösungen

Das zu untersuchende Galactomannan wurde unter Rühren mit dem gewählten Lösemittel (entionisiertem Wasser oder Salzlösung) vermischt. Anschließend wurde die Mischung mit weiterem Lösemittel auf den gewünschten Polymergehalt verdünnt. Die Mischung wurde solange gerührt, bis eine homogene Lösung entstand. Alternativ wurde auch die entsprechende Menge des Galactomannans mit der gesamten Lösemittelmenge vermischt und solange gerührt bis eine homogene Lösung entstand. Die jeweilige Konzentration ist in den nachfolgenden Tabellen angegeben.

### Charakterisierung der erhaltenen Gele

### 1) Sedimentationsverhalten von Proppants

Die Festigkeit der Gele wurde anhand des Sedimentationsverhaltens von Proppants im Gel bestimmt. Es wurde ein handelsübliches Keramik-Proppant mit einer Partikelgröße im Bereich von 0.4 bis 0.9 mm eingesetzt. Für die Tests wurden in einem 25 ml Penicillinglas 10 g des zu testenden Gels mit 4 g Proppants versetzt und intensiv mit einem Spatel vermischt, bis das Proppant homogen im Gel verteilt war.

Nach einer Standzeit von 2 h wurde das Sedimentationsverhalten der Mischung visuell beurteilt und wie folgt eingestuft:

| Sedimentationsverhalten | Beurteilung |
|---|---|
| keine Sedimentation | ++ |
| weniger als 50% Sedimentation / kaum Sedimentation | + |
| mehr als 50% Sedimentation / größtenteils sedimentiert | - |
| vollständige Sedimentation | -- |

### 2) Bestimmung des Verlustfaktors

Die Gelbildung ausgewählter Proben wurde mit einem MCR Rheometer der Firma Anton Paar in Oszillation gemessen. Dabei wurde der Speichermodul G' und Verlustmodul G" im Frequenzbereich von 0,01 bis 100rad/s bei 25°C mit einer Deformation, die innerhalb des linear-viskoelastischen Bereichs einer jeden Probe liegt, gemessen. Der Verlustfaktor tan δ resultiert aus dem Quotient G"/G'. In nachfolgenden Tabellen ist der Verlustfaktor bei 0,1rad/s angegeben. Durch Oxidation mit TEMPO (oder Derivat) und Oxidationsmittel wird dieser Wert erniedrigt, was auf zunehmender Gelbildung beruht. Je kleiner der Verlustfaktor ist, desto stärker ist der Gelcharakter des Fluids ausgeprägt und somit die Sedimentationsgeschwindigkeit der Proppants verlangsamt.

### Versuchsreihe 1:

### Gelbildung durch Oxidation mit 4-Hydroxy-TEMPO und NaOCl

Es wurde eine Lösung von Guar in entionisiertem Wasser in der in Tabelle 1 angegebenen Konzentration eingesetzt. 4-Hydroxy-TEMPO wurde als Lösung in Wasser (5 bzw. 20 Gew.-%, je nach Versuch) eingesetzt, NaOCl ebenfalls als Lösung in Wasser (13,1 Gew. %). 50g der Guar-Lösung wurden mit der in Tabelle 1 angegebenen Menge an wässriger 4-Hydroxy-TEMPO-Lösung versetzt und homogenisiert. Anschließend wurde die gewünschte Menge an Natriumhypochlorit-Lösung hinzugegeben und solange homogenisiert bis ein Gel sich ausbildete. Die molaren Mengenverhältnisse an OH-TEMPO und NaOCl beziehen sich auf AGU und sind ebenfalls in AGU angegeben.

Das Sedimentationsverhalten von Proppants im Gel wurde wie oben bestimmt, und zwar frühestens am nächsten Tag. Für ausgewählte Beispiele wurde auch der Verlustfaktor tan δ bestimmt. Die Ergebnisse sind ebenfalls in Tabelle 1 zusammengestellt.
Auto-

**Tabelle 1: Versuchsbedingungen und Ergebnisse von Versuchsreihe 1**

| Nr. | Feststoffgehalt Guar-Lösung [Gew.-%] | HO-TEMPO [mol-%] bzgl. AGU | NaOCl [mol-%] bzgl. AGU | Sedimentationsverhalten | Verlustfaktor tan δ (0,1 rad/s) |
|---|---|---|---|---|---|
| 0 | 1 | 0 | 0 | -- | 2,63 |
| 1 | 1 | 0,5 | 5,0 | -- | - |
| 2 | 1 | 0,6 | 7,3 | -- | - |
| 3 | 1 | 0,5 | 9,7 | -- | 1,77 |
| 4 | 1 | 0,5 | 12,3 | -- | 1,29 |
| 5 | 1 | 0,5 | 15,3 | -- | - |
| 6 | 1 | 1,0 | 4,8 | -- | - |
| 7 | 1 | 1,1 | 7,8 | -- | - |
| 8 | 1 | 1,0 | 9,9 | -- | 1,56 |
| 9 | 1 | 1,1 | 12,1 | -- | 0,53 |
| 10 | 1 | 1,0 | 14,8 | ++ | 0,23 |
| 11 | 1 | 1,9 | 4,7 | -- | - |
| 12 | 1 | 2,0 | 8,0 | -- | 1,44 |
| 13 | 1 | 2,0 | 10,1 | -- | 0,71 |
| 14 | 1 | 2,1 | 12,7 | ++ | 0,27 |
| 15 | 1 | 2,0 | 15,1 | ++ | 0,18 |
| 16 | 1 | 0,5 | 19,6 | -- | - |
| 17 | 1 | 1,1 | 19,8 | ++ | 0,17 |

### Versuchsreihe 2:

### Gelbildung durch Oxidation mit 4-Hydroxy-TEMPO und NaOCl + NaBr in salzhaltigem Wasser

Es wurde eine Lösung von Guar in einer Mischung aus 97 Gew.-% Wasser und 3 Gew.-% darin gelöstem KCl in der in Tabelle 2 angegebenen Konzentration eingesetzt. Die weiteren Komponenten wurden als Lösung in Wasser angesetzt (4-Hydroxy-TEMPO: 20 Gew.-%, NaOCl: 11 Gew.-% und NaBr: 40Gew.-%).

50g der Guar-Lösung wurden mit der in Tabelle 2 angegebenen Menge an wässriger 4-Hydroxy-TEMPO-Lösung sowie wässrige NaBr versetzt und homogenisiert. Anschließend wurde die gewünschte Menge an Natriumhypochlorit-Lösung hinzugegeben und solange homogenisiert bis ein Gel sich ausbildete. Die molaren Mengenverhältnisse an OH-TEMPO und NaOCl beziehen sich auf AGU und sind ebenfalls in AGU angegeben.

Das Sedimentationsverhalten von Proppants im Gel wurde wie oben bestimmt, und zwar frühestens am nächsten Tag. Die Ergebnisse sind ebenfalls in Tabelle 2 zusammengestellt.

**Tabelle 2: Versuchsbedingungen und Ergebnisse von Versuchsreihe 2**

| Nr. | Feststoffgehalt Guar-Lösung [%] | HO-TEMPO [mol%] bzgl. AGU | NaBr [mol%] bzgl. AGU | NaOCl [mol%] bzgl. AGU | Sedimentationsverhalten |
|---|---|---|---|---|---|
| 1 | 0,4 | 1,1 | 0 | 30,2 | -- |
| 2 | 0,4 | 1,1 | 25,2 | 30,1 | -- |
| 3 | 0,4 | 1,0 | 50,4 | 30,0 | -- |
| 4 | 0,4 | 5,0 | 0 | 29,9 | + |
| 5 | 0,4 | 5,0 | 25,5 | 30,2 | ++ |
| 6 | 0,4 | 5,0 | 50,4 | 29,9 | ++ |
| 7 | 0,4 | 10,2 | 0 | 30,1 | ++ |
| 8 | 0,4 | 10,2 | 25,3 | 29,8 | ++ |
| 9 | 0,4 | 10,3 | 50,6 | 29,9 | ++ |

### Versuchsreihe 3:

### Gelbildung durch Oxidation mit 4-Hydroxy-TEMPO und NaOCl in Wasser verschiedener Salinität

Es wurde Lösungen von Guar in Wasser mit unterschiedlichen Salzen hergestellt. Die Zusammensetzung der Salzlösung und die Guar-Konzentration sind in Tabelle 3 angegeben. 4-Hydroxy-TEMPO wurde als Lösung in Wasser (5 bzw. 20 Gew.-%, je nach Versuch) eingesetzt, NaOCl ebenfalls als Lösung in Wasser (11,5 und 11,7 Gew. %).

Jeweils 50g der Guar-Lösungen wurden mit der in Tabelle 3 angegebenen Menge an wässriger 4-Hydroxy-TEMPO-Lösung versetzt und homogenisiert. Anschließend wurde die gewünschte Menge an Natriumhypochlorit-Lösung hinzugegeben und solange homogenisiert bis ein Gel sich ausbildete. Die molaren Mengenverhältnisse an OH-TEMPO und NaOCl beziehen sich auf AGU und sind ebenfalls in AGU angegeben.

Das Sedimentationsverhalten von Proppants im Gel wurde wie oben bestimmt, und zwar frühestens am nächsten Tag. Die Ergebnisse sind ebenfalls in Tabelle 3 zusammengestellt.

**Tabelle 3: Versuchsbedingungen und Ergebnisse von Versuchsreihe 3**

| Nr. | Feststoffgehalt Guar-Lösung [%] | Lösemittel [w/w] | HO-TEMPO [mol%] bzgl. AGU | NaOCl [mol%] bzgl. AGU | Sedimentationsverhalten |
|---|---|---|---|---|---|
| 1 | 0,4 | H₂O (100) | | | -- |
| 2 | 0,4 | H₂O (100) | 1,0 | 31,3 | -- |
| 3 | 0,4 | H₂O (100) | 2,5 | 29,9 | -- |
| 4 | 0,4 | H₂O (100) | 5,3 | 30,4 | -- |
| 5 | 0,4 | H₂O (100) | 10,1 | 30,8 | -- |
| 6 | 0,4 | H₂O (100) | 15,2 | 31,0 | -- |
| 7 | 0,4 | H₂O/NaCl (90/10) | | | -- |
| 8 | 0,4 | H₂O/NaCl (90/10) | 1,1 | 30,4 | -- |
| 9 | 0,4 | H₂O/NaCl (90/10) | 2,5 | 30,9 | + |
| 10 | 0,4 | H₂O/NaCl (90/10) | 5,3 | 30,0 | ++ |
| 11 | 0,4 | H₂O/NaCl (90/10) | 10,3 | 30,0 | ++ |
| 12 | 0,4 | H₂O/NaCl (90/10) | 14,7 | 31,5 | ++ |
| 13 | 0,4 | H₂O/Na₂SO₄ (90/10) | | | -- |
| 14 | 0,4 | H₂O/Na₂SO₄ (90/10) | 1,1 | 29,8 | -- |
| 15 | 0,4 | H₂O/Na₂SO₄ (90/10) | 2,5 | 30,1 | -- |
| 16 | 0,4 | H₂O/Na₂SO₄ (90/10) | 5,0 | 30,2 | + |
| 17 | 0,4 | H₂O/Na₂SO₄ (90/10) | 10,4 | 30,2 | ++ |
| 18 | 0,4 | H₂O/Na₂SO₄ (90/10) | 15,2 | 30,0 | ++ |
| 19 | 0,4 | H₂O/NH₄Cl (90/10) | | | -- |
| 20 | 0,4 | H₂O/NH₄Cl (90/10) | 1,1 | 30,0 | -- |
| 21 | 0,4 | H₂O/NH₄Cl (90/10) | 2,5 | 30,4 | -- |
| 22 | 0,4 | H₂O/NH₄Cl (90/10) | 5,5 | 30,5 | -- |
| 23 | 0,4 | H₂O/NH₄Cl (90/10) | 10,3 | 30,5 | -- |
| 24 | 0,4 | H₂O/NH₄Cl (90/10) | 15,1 | 30,3 | -- |
| 25 | 0,4 | H₂O/(NH₄)₂SO₄ (90/10) | | | -- |
| 26 | 0,4 | H₂O/(NH₄)₂SO₄ (90/10) | 1,1 | 29,8 | -- |
| 27 | 0,4 | H₂O/(NH₄)₂SO₄ (90/10) | 2,6 | 30,1 | -- |
| 28 | 0,4 | H₂O/(NH₄)₂SO₄ (90/10) | 5,2 | 31,4 | -- |
| 29 | 0,4 | H₂O/(NH₄)₂SO₄ (90/10) | 10,2 | 29,9 | -- |
| 30 | 0,4 | H₂O/(NH₄)₂SO₄ (90/10) | 15,0 | 29,8 | -- |
| 31 | 0,4 | H₂O/KCl (90/10) | | | -- |
| 32 | 0,4 | H₂O/KCl (90/10) | 1,1 | 30,0 | -- |
| 33 | 0,4 | H₂O/KCl (90/10) | 2,6 | 30,6 | -- |
| 34 | 0,4 | H₂O/KCl (90/10) | 5,4 | 30,1 | ++ |
| 35 | 0,4 | H₂O/KCl (90/10) | 10,5 | 30,4 | ++ |
| 36 | 0,4 | H₂O/KCl (90/10) | 15,1 | 30,7 | ++ |

### Versuchsreihe 4:

### Gelbildung durch Oxidation mit 4-Hydroxy-TEMPO und NaOCl in Gegenwart von Tensiden

Als Tensid wurden ethoxylierte Fettalkohole (C16/C18) mit unterschiedlicher Anzahl an EO-Segmenten. Es wurden die folgenden Tenside eingesetzt (jeweils als 20 %-ige Lösung in Wasser):

| | Anzahl EO | Mₙ [g/mol] |
|---|---|---|
| Tensid 1 | ∼ 25 | ∼1312 |
| Tensid 2 | ∼ 18 | ∼1044 |
| Tensid 3 | ∼ 11 | ∼ 777 |

Es wurde eine Lösung von Guar in entionisiertem Wasser in der in Tabelle 4 angegebenen Konzentration eingesetzt. 4-Hydroxy-TEMPO wurde als Lösung in Wasser (20 Gew.-%) eingesetzt, NaOCl ebenfalls als Lösung in Wasser (11,5 Gew. %).

50 g der Guar-Lösung wurden mit der in Tabelle 4 angegebenen Menge an wässriger 4-Hydroxy-TEMPO-Lösung sowie Tensid versetzt und homogenisiert. Anschließend wurde die gewünschte Menge an Natriumhypochlorit-Lösung hinzugegeben und solange homogenisiert bis ein Gel sich ausbildete. Die molaren Mengenverhältnisse an OH-TEMPO, NaOCl und Tensiden beziehen sich auf AGU und sind ebenfalls in AGU angegeben.

Das Sedimentationsverhalten von Proppants im Gel wurde wie oben bestimmt, und zwar frühestens am nächsten Tag. Die Ergebnisse sind ebenfalls in Tabelle 4 zusammengestellt.

**Tabelle 4: Versuchsbedingungen und Ergebnisse von Versuchsreihe 4**

| Nr. | Feststoffgehalt Guar-Lösung [%] | Tensid [g/mol] | HO-TEMPO [mol%] bzgl. AGU | Tensid [mol%] bzgl. AGU | NaOCl [mol%] bzgl. AGU | Sedimentationsverhalten |
|---|---|---|---|---|---|---|
| 1 | 0,4 | Tensid 1 | 19,8 | | 30,2 | -- |
| 2 | 0,4 | Tensid 1 | 20,1 | 3,1 | 31,2 | - |
| 3 | 0,4 | Tensid 1 | 20,3 | 6,3 | 30,6 | + |
| 4 | 0,4 | Tensid 1 | 20,2 | 12,6 | 30,1 | + |
| 5 | 0,4 | Tensid 2 | 20,3 | | 30,4 | -- |
| 6 | 0,4 | Tensid 2 | 20,1 | 4,0 | 31,2 | + |
| 7 | 0,4 | Tensid 2 | 20,1 | 7,8 | 30,6 | ++ |
| 8 | 0,4 | Tensid 2 | 20,1 | 15,5 | 30,3 | ++ |
| 9 | 0,4 | Tensid 3 | 19,9 | | 30,6 | - |
| 10 | 0,4 | Tensid 3 | 19,8 | 5,3 | 30,4 | + |
| 11 | 0,4 | Tensid 3 | 20,2 | 10,7 | 29,9 | + |
| 12 | 0,4 | Tensid 3 | 19,9 | 21,0 | 30,5 | ++ |

### Versuchsreihe 5:

### Gelbildung durch Oxidation mit 4-Hydroxy-TEMPO und NaOCl in wässriger KCl-Lösung

Es wurde eine Lösung von Guar in einer Lösung aus 97 Gew.-% Wasser sowie 3 Gew.-% KCl in der in Tabelle angegebenen Konzentration eingesetzt. 4-Hydroxy-TEMPO wurde als Lösung in Wasser (20 Gew.-%) eingesetzt, NaOCl ebenfalls als Lösung in Wasser (11,5 Gew. %).

50g der Guar-Lösung wurden mit der in Tabelle 5 angegebenen Menge an wässriger 4-Hydroxy-TEMPO-Lösung versetzt und homogenisiert. Anschließend wurde die gewünschte Menge an Natriumhypochlorit-Lösung hinzugegeben und solange homogenisiert bis ein Gel sich ausbildete. Die molaren Mengenverhältnisse an OH-TEMPO und NaOCl beziehen sich auf AGU und sind ebenfalls in AGU angegeben.

Das Sedimentationsverhalten von Proppants im Gel wurde wie oben bestimmt, und zwar frühestens am nächsten Tag. Weiterhin wurden die Gele zusätzlich bei 60°C für 2 h temperiert und das Sedimentationsverhalten nach Abkühlen untersucht. Die Ergebnisse sind ebenfalls in Tabelle 5 zusammengestellt.

**Tabelle 5: Versuchsbedingungen und Ergebnisse von Versuchsreihe 5**

| Nr. | Feststoffgehalt Guat-Lösung [%] | HO-TEMPO [mol%] bzgl. AGU | NaOCl [mol%] bzgl. AGU | Sedimentationsverhalten RT | Sedimentationsverhalten 60°C |
|---|---|---|---|---|---|
| 1 | 0,4 | 5,2 | 20,1 | + | -- |
| 2 | 0,4 | 10,3 | 20,2 | + | -- |
| 3 | 0,4 | 15,1 | 20,3 | + | -- |
| 4 | 0,4 | 20,0 | 20,3 | ++ | -- |
| 5 | 0,4 | 30,1 | 20,4 | ++ | -- |
| 6 | 0,4 | 50,5 | 19,9 | ++ | -- |
| 7 | 0,4 | 5,2 | 30,3 | + | -- |
| 8 | 0,4 | 10,1 | 30,4 | ++ | -- |
| 9 | 0,4 | 15,4 | 30,0 | ++ | + |
| 10 | 0,4 | 20,0 | 30,0 | ++ | + |
| 11 | 0,4 | 30,1 | 30,1 | ++ | ++ |
| 12 | 0,4 | 50,1 | 30,3 | ++ | ++ |

### Versuchsreihe 6:

### Beispiel 6: Verwendung eines Guar-Slurrys, Test in KCl-Lösung

Guar wurde zusammen mit 4-Hydroxy-TEMPO im molaren Verhältnis von 100 AGU : 30 4-Hydroxy-TEMPO eingewogen. Anschließend wurde die Mischung im Lösemittel Triethylcitrat suspendiert, so dass die Suspension einen Guargehalt von 30 Gew.-% (Trockenmasse von Guar) hatte. Die Slurry wurde solange homogenisiert bis das 4-Hydroxy-TEMPO sich vollständig löste.

Der Guar-Slurry wurde zu 3 %-iger wässriger KCl-Lösung gegeben und solange gerührt bis eine homogene Lösung entstand. Es wurde eine Guar-Konzentration von 0,4 Gew.-% eingestellt.

NaOCl wurde als Lösung in Wasser eingesetzt (11 Gew. %).

Jeweils 50g der Guar-Stammlösung wurden mit der in Tabelle 6 angegebenen Menge an wässriger NaOCI-Lösung versetzt und homogenisiert bis ein Gel sich ausbildete. Die molaren Mengenverhältnisse an OH-TEMPO und NaOCl beziehen sich auf AGU und sind ebenfalls in AGU angegeben.

Das Sedimentationsverhalten von Proppants im Gel wurde wie oben bestimmt, und zwar frühestens am nächsten Tag. Die Gele wurden zusätzlich bei 60°C für 2h temperiert und das Sedimentationsverhalten nach Abkühlen untersucht. Die Ergebnisse sind in Tabelle 6 zusammengestellt.

**Tabelle 6: Versuchsbedingungen und Ergebnisse von Versuchsreihe 6**

| Nr. | Feststoffgehalt Guar-Lösung [%] | HO-TEMPO [mol%] bzgl. AGU | NaOCl [mol%] bzgl. AGU | Sedimentationsverhalten RT | Sedimentationsverhalten 60°C |
|---|---|---|---|---|---|
| 1 | 0,4 | 30,0 | 20,2 | - | - |
| 2 | 0,4 | 30,0 | 30,1 | ++ | ++ |
| 3 | 0,4 | 30,0 | 40,0 | ++ | ++ |
| 4 | 0,4 | 30,0 | 49,7 | ++ | ++ |
| 5 | 0,4 | 30,0 | 60,2 | ++ | ++ |
| 6 | 0,4 | 30,0 | 70,2 | ++ | ++ |
| 7 | 0,4 | 30,0 | 80,5 | ++ | ++ |
| 8 | 0,4 | 30,0 | 90,0 | ++ | ++ |
| 9 | 0,4 | 30,0 | 100,2 | ++ | + |
| 10 | 0,4 | 30,0 | 120,0 | + | + |
| 11 | 0,4 | 30,0 | 150,7 | + | + |

### Versuchsreihe 7:

### Gelbildung durch Oxidation mit 4-Hydroxy-TEMPO und NaOCl in konzentrierter Salzlösung

Es wurden Lösungen von Guar in 25% NaCI-Lösung hergestellt. Die Guar-Konzentration ist in Tabelle 7 angegeben. 4-Hydroxy-TEMPO wurde als Lösung in Wasser (1 oder 20 Gew.-%, je nach Versuch) eingesetzt, NaOCl ebenfalls als Lösung in Wasser (11,2 Gew. %).

Jeweils 50g der Guar-Lösungen wurden mit der in Tabelle 7 angegebenen Menge an wässriger 4-Hydroxy-TEMPO-Lösung versetzt und homogenisiert. Anschließend wurde die gewünschte Menge an Natriumhypochlorit-Lösung hinzugegeben und solange homogenisiert bis ein Gel sich ausbildete. Die molaren Mengenverhältnisse an OH-TEMPO und NaOCl beziehen sich auf AGU und sind ebenfalls in AGU angegeben.
Das Sedimentationsverhalten von Proppants im Gel wurde wie oben bestimmt, und zwar frühestens am nächsten Tag. Die Ergebnisse sind ebenfalls in Tabelle 7 zusammengestellt. Für ausgewählte Beispiele wurde auch der Verlustfaktor tan δ bestimmt.

**Tabelle 7: Versuchsbedingungen und Ergebnisse von Versuchsreihe 7**

| Nr. | Feststoffgehalt Guar-Lösung [%] | HO-TEMPO [mol%] bzgl. AGU | NaOCl [mol%] bzgl. AGU | Sed imentationsverhalten | Verlustfaktor tan δ (0,1 rad/s) |
|---|---|---|---|---|---|
| 1 | 0,4 | 0 | 0 | -- | n.d. |
| 2 | 0,4 | 5,4 | 30,0 | ++ | 0,22 |
| 3 | 0,4 | 10,2 | 30,0 | ++ | 0,23 |
| 4 | 0,4 | 15,0 | 30,1 | ++ | n.d. |
| 5 | 1 | 0 | 0 | - | n.d. |
| 6 | 1 | 0,51 | 10,3 | ++ | 0,53 |
| 7 | 1 | 0,51 | 19,9 | ++ | 0,24 |
| 8 | 1 | 0,25 | 20,2 | -- | n.d. |
| 9 | 1 | 0,75 | 20,2 | ++ | 0,22 |

### Versuchsreihe 8:

### Gelbildung durch Oxidation mit 4-Hydroxy-TEMPO und NaOCl in wässriger KCl-Lösung (HPG)

Es wurde eine Lösung von HPG in einer Lösung aus 97 Gew.-% Wasser sowie 3 Gew.-% KCl in der in Tabelle angegebenen Konzentration eingesetzt. 4-Hydroxy-TEMPO wurde als Lösung in Wasser (20 Gew.-%) eingesetzt, NaOCl ebenfalls als Lösung in Wasser (11,2 Gew. %).

50g der HPG-Lösung wurden mit der in Tabelle 8 angegebenen Menge an wässriger 4-Hydroxy-TEMPO-Lösung versetzt und homogenisiert. Anschließend wurde die gewünschte Menge an Natriumhypochlorit-Lösung hinzugegeben und solange homogenisiert bis ein Gel sich ausbildete. Die molaren Mengenverhältnisse an OH-TEMPO und NaOCl beziehen sich auf AGU und sind ebenfalls in AGU angegeben.

Das Sedimentationsverhalten von Proppants im Gel wurde wie oben bestimmt, und zwar frühestens am nächsten Tag. Die Ergebnisse sind ebenfalls in Tabelle 8 zusammengestellt.

**Tabelle 8: Versuchsbedingungen und Ergebnisse von Versuchsreihe 8**

| Nr. | Feststoffgehalt HPG-Lösung [%] | HO-TEMPO [mol%] bzgl. AGU | NaOCl [mol%] bzgl. AGU | Sedimentationsverhalten |
|---|---|---|---|---|
| 1 | 0,4 | 0 | 0 | -- |
| 2 | 0,4 | 30,0 | 30,1 | - |
| 3 | 0,4 | 49,9 | 30,2 | + |
| 4 | 0,4 | 30,2 | 40,0 | -- |
| 5 | 0,4 | 19,9 | 30,0 | -- |

### Versuchsreihe 9:

### Gelbildung durch Oxidation mit 4-Hydroxy-TEMPO und NaOCl in wässriger KCl-Lösung in Abhängigkeit des pH-Wertes

Es wurde eine Lösung von Guar in einer Lösung aus 97 Gew.-% Wasser sowie 3 Gew.-% KCl in der in Tabelle angegebenen Konzentration eingesetzt. 4-Hydroxy-TEMPO wurde als Lösung in Wasser (20 Gew.-%) eingesetzt, NaOCl ebenfalls als Lösung in Wasser (11,2 Gew. %).

100g der Guar-Lösung wurden mit 2M Salzsäure oder 2M Natronlauge auf die in Tabelle 9 angegebenen pH-Werte eingestellt. Anschließend wurden diese Lösungen mit der in Tabelle 9 angegebenen Menge an wässriger 4-Hydroxy-TEMPO-Lösung versetzt und homogenisiert. Anschließend wurde die gewünschte Menge an Natriumhypochlorit-Lösung hinzugegeben und solange homogenisiert bis ein Gel sich ausbildete. Danach wurde der pH-Wert nach der Oxidation gemessen. Die molaren Mengenverhältnisse an OH-TEMPO und NaOCl beziehen sich auf AGU und sind ebenfalls in AGU angegeben.

Das Sedimentationsverhalten von Proppants im Gel wurde wie oben bestimmt, und zwar frühestens am nächsten Tag. Für ausgewählte Beispiele wurde auch der Verlustfaktor tan δ bestimmt. Die Ergebnisse sind ebenfalls in Tabelle 9 zusammengestellt.

**Tabelle 9: Versuchsbedingungen und Ergebnisse von Versuchsreihe 9**

| No. | Feststoffgehalt Guat-Lösung [%] | HO-TEMPO [mol%] bzgl. AGU | NaOCl [mol%] bzgl. AGU | pH-Wert vor Oxidation | pH-Wert nach Oxidation | Sedimentationsverhalten RT | Verlustfaktor tan δ (0,1 rad/s) |
|---|---|---|---|---|---|---|---|
| 1 | 0,4 | 30,2 | 30,2 | 2,0 | 3,0 | -- | 3,9 |
| 2 | 0,4 | 30,0 | 30,5 | 2,9 | 3,4 | -- | 2,8 |
| 3 | 0,4 | 30,3 | 30,5 | 3,7 | 4,5 | ++ | 0,27 |
| 4 | 0,4 | 30,0 | 29,9 | 6,0 | 5,5 | ++ | 0,13 |
| 5 | 0,4 | 30,3 | 29,8 | 7,0 | 6,3 | ++ | 0,13 |
| 6 | 0,4 | 30,0 | 30,1 | 9,5 | 6,5 | -- | 0,94 |
| 7 | 0,4 | 30,3 | 30,2 | 11,0 | 8,7 | -- | 4,7 |
| 8 | 0,4 | - | - | 7,1 | 7,1 | -- | 7,5 |

### Versuchsreihe 10:

### Gelbildung durch Oxidation mit TEMPO und TEMPO-Derivaten und NaOCl in wässriger KCl-Lösung

Es wurde eine Lösung von Guar in einer Lösung aus 97 Gew.-% Wasser sowie 3 Gew.-% KCl in der in Tabelle angegebenen Konzentration eingesetzt. TEMPO und TEMPO-Deivate (in Tabelle angegeben) wurden als Feststoff eingesetzt (Reinheit nach Herstellerangabe) und NaOCl als Lösung in Wasser (11,2 Gew. %).

100g der Guar-Lösung wurden der in Tabelle 10 angegebenen Katalysatoren versetzt und solange homogenisiert bis eine Lösung entstand. Anschließend wurden diesen Lösungen mit der in Tabelle 9 angegebenen Menge an Natriumhypochlorit-Lösung hinzugegeben und solange homogenisiert bis ein Gel sich ausbildete. Die molaren Mengenverhältnisse an TEMPO, TEMPO-Derivaten und NaOCl beziehen sich auf AGU und sind ebenfalls in AGU angegeben.

Das Sedimentationsverhalten von Proppants im Gel wurde wie oben bestimmt, und zwar frühestens am nächsten Tag. Für ausgewählte Beispiele wurde auch der Verlustfaktor tan δ bestimmt. Die Ergebnisse sind ebenfalls in Tabelle 10 zusammengestellt.

**Tabelle 10: Versuchsbedingungen und Ergebnisse von Versuchsreihe 10**

| No. | Feststoffgehalt Guat-Lösung [%] | Katalysator | Katalysator [mol%] bzgl. AGU | NaOCl [mol%] bzgl. AGU | Sedimentationsverhalten RT | Verlustfaktor tan δ (0,1 rad/s) |
|---|---|---|---|---|---|---|
| 1 | 0,4 | Hydroxy-TEMPO | 40,6 | 30,3 | ++ | 0,11 |
| 2 | 0,4 | TEMPO | 30,0 | 31,3 | ++ | 0,07 |
| 3 | 0,4 | Amino-TEMPO | 31,2 | 30,3 | -- | 4,9 |
| 4 | 0,4 | Acetamido- TEMPO | 30,5 | 30,2 | ++ | 0,06 |
| 5 | 0,4 | Methoxy- TEMPO | 30,1 | 30,1 | ++ | 0,07 |
| 6 | 0,4 | Oxo-TEMPO | 30,4 | 30,7 | -- | 8,3 |

### Versuchsreihe 11:

### Verwendung eines Guar-Slurrys mit TEMPO, Test in KCl-Lösung

Guar wurde zusammen mit TEMPO im molaren Verhältnis von 100 AGU : 30 TEMPO eingewogen. Anschließend wurde die Mischung in Naphtha suspendiert, so dass die Suspension einen Guargehalt von 30 Gew.-% (Trockenmasse von Guar) hatte. Der Slurry wurde solange homogenisiert bis TEMPO sich vollständig löste.

Der Guar-Slurry wurde diese zu 3 %-iger wässriger KCl-Lösung gegeben und solange gerührt bis sich homogene Lösung entstand. Es wurde eine Guar-Konzentration von 0,4 Gew.-% eingestellt.

NaOCl als Lösung in Wasser eingesetzt (11,3 Gew. %).

Jeweils 50g der Guar-Stammlösung wurden mit der in Tabelle 11 angegebenen Menge an Natriumhypochlorit-Lösung versetzt und solange homogenisiert bis ein Gel sich ausbildete. Die molaren Mengenverhältnisse an TEMPO und NaOCl beziehen sich auf AGU und sind ebenfalls in AGU angegeben.

Das Sedimentationsverhalten von Proppants im Gel wurde wie oben bestimmt, und zwar frühestens am nächsten Tag. Die Ergebnisse sind in Tabelle 11 zusammengestellt.

**Tabelle 11: Versuchsbedingungen und Ergebnisse von Versuchsreihe 11**

| No. | Feststoffgehalt Guar-Lösung [%] | TEMPO [mol%] bzgl. AGU | NaOCl [mol%] bzgl. AGU | Sedimentationsverhalten RT |
|---|---|---|---|---|
| 1 | 0,4 | 30,1 | | -- |
| 2 | 0,4 | 30,1 | 30,0 | ++ |
| 3 | 0,4 | 30,1 | 40,1 | ++ |
| 4 | 0,4 | 30,1 | 30,0 | ++ |

### Versuchsreihe 12:

### Gelbildung durch Oxidation mit 4-Hydroxy-TEMPO und NaOCl in künstlichem Meerwasser

Es wurde eine Lösung von Guar in künstlichem Meerwasser in der in Tabelle angegebenen Konzentration eingesetzt. 4-Hydroxy-TEMPO wurde als Lösung in Wasser (20 Gew.-%) eingesetzt, NaOCl ebenfalls als Lösung in Wasser (11,3 Gew. %).

50g der Guar-Lösung wurden mit der in Tabelle 12 angegebenen Menge an wässriger 4-Hydroxy-TEMPO-Lösung versetzt und homogenisiert. Anschließend wurde die gewünschte Menge an Natriumhypochlorit-Lösung hinzugegeben und solange homogenisiert bis ein Gel sich ausbildete. Die molaren Mengenverhältnisse an OH-TEMPO und NaOCl beziehen sich auf AGU und sind ebenfalls in AGU angegeben.

Das Sedimentationsverhalten von Proppants im Gel wurde wie oben bestimmt, und zwar frühestens am nächsten Tag. Die Ergebnisse sind ebenfalls in Tabelle 12 zusammengestellt.

**Tabelle 12: Versuchsbedingungen und Ergebnisse von Versuchsreihe 12**

| No. | Feststoffgehalt Guat-Lösung [%] | HO-TEMPO [mol%] bzgl. AGU | NaOCl [mol%] bzgl. AGU | Sedimentationsverhalten RT |
|---|---|---|---|---|
| 1 | 0,4 | - | - | -- |
| 2 | 0,4 | 20,0 | 30,0 | ++ |
| 3 | 0,4 | 30,1 | 40,1 | ++ |
| 4 | 0,4 | 30,0 | 30,0 | ++ |

## Patentansprüche

1. Verfahren zum Fracturing unterirdischer, öl- und/oder gasführender Formationen umfassend das Injizieren eines wässrigen Fracturing-Fluids umfassend mindestens ein Galactomannan sowie Proppants durch ein Bohrloch in die Formation, wobei das wässrige Fracturing-Fluid unter einem Druck injiziert wird, der ausreichend ist, um die Formation aufzubrechen und neue Risse in der Formation zu erzeugen und/oder existierende Risse in der Formation zu vergrößern und/oder zu verlängern,
**dadurch gekennzeichnet, dass** das wässrige Fracturing-Fluid mindestens
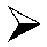 eine wässrige Basis-Flüssigkeit,
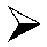 0,1 bis 2 Gew. % mindestens eines Galactomannans,
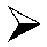 Proppants, sowie
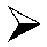 Oxidationsmittel, welche die Galactomannane zu Carbonylgruppen aufweisenden Galactomannanen oxidieren können, umfasst,
wobei die Menge an Galactomannanen auf die Summe aller Komponenten des wässrigen Fracturing-Fluids mit Ausnahme der Proppants bezogen ist, und wobei sich die Viskosität des wässrigen Fracturing-Fluids im Zuge der Oxidation erhöht.

2. Verfahren gemäß Anspruch 1, **dadurch gekennzeichnet, dass** es sich bei dem Oxidationsmittel um eine Kombination umfassend mindestens ein Hypochlorit und Di-t-alkylnitroxylradikale handelt, mit der Maßgabe, dass der pH-Wert des wässrigen Fracturing-Fluids nach der Oxidation weniger als 7 beträgt.

3. Verfahren gemäß Anspruch 2, **dadurch gekennzeichnet, dass** es sich bei den Di-t-alkylnitroxylradikalen um Verbindungen der allgemeinen Formeln (I) oder (II) 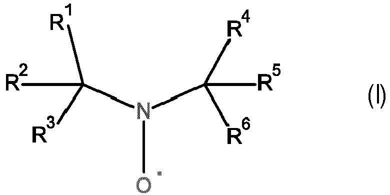 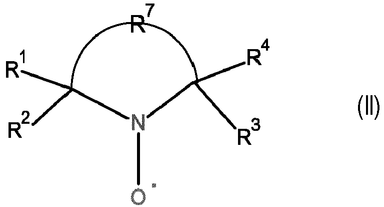 handelt, wobei
• die Gruppen R¹, R², R³, R⁴, R⁵ und R⁶ unabhängig voneinander für C₁- bis C₁₂-Alkylgruppen stehen und
• R⁷ für eine Alkylengruppe mit 2 bis 4 Kohlenstoffatomen steht, welche substituiert sein kann und/oder nicht benachbarte Kohlenstoffatome durch Sauerstoffatome und/oder Stickstoffatome ersetzt sein können.

4. Verfahren gemäß Anspruch 2, **dadurch gekennzeichnet, dass** es sich bei den Di-t-alkylnitroxylradikalen um Verbindungen der allgemeinen Formel (III) 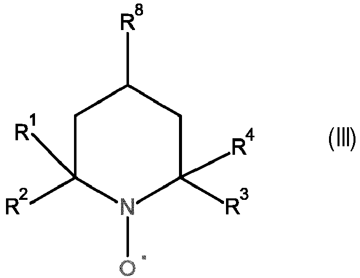 handelt, wobei
• R¹, R², R³ und R⁴ die obige Bedeutung haben, und
• R⁸ steht für H, eine lineare oder verzweigte Alkylgruppe mit 1 bis 12 Kohlenstoffatome, -OH, -OR⁹, -NH₂, -NHR⁹, -NR⁹ oder -NH-C(=O)-CH₃, wobei R⁹ für eine lineare oder verzweigte Alkylgruppe mit 1 bis 12 Kohlenstoffatomen steht.

5. Verfahren gemäß Anspruch 2, **dadurch gekennzeichnet, dass** es sich bei den Di-t-alkylnitroxylradikalen um eine Verbindung ausgewählt aus der Gruppe von 4-Hydroxy-2,2,6,6-Tetramethylpiperidinyloxyl (4-Hydroxy-TEMPO), 4-Acetamido-2,2,6,6-Tetramethylpiperidinyloxyl (4-Acetamido-TEMPO), 4-Methoxy-2,2,6,6-Tetramethylpiperidinyloxyl (4-Methoxy-TEMPO), oder 2,2,6,6-Tetramethylpiperidinyloxyl (TEMPO) handelt.

6. Verfahren gemäß Anspruch 2, **dadurch gekennzeichnet, dass** es sich bei den Di-t-alkylnitroxylradikalen um 4-Hydroxy-2,2,6,6-Tetramethylpiperidinyloxyl (4-Hydroxy-TEMPO) handelt.

7. Verfahren gemäß einem der Ansprüche 2 bis 6, **dadurch gekennzeichnet, dass** der pH-Wert des wässrigen Fracturing-Fluids nach der Oxidation 3 bis 6,5 beträgt.

8. Verfahren gemäß einem der Ansprüche 1 bis 7, **dadurch gekennzeichnet, dass** die Konzentration der Galactomannane 0,2 bis 1,5 Gew. % bezüglich der Summe aller Komponenten des Fracturing-Fluids mit Ausnahme der Proppants beträgt.

9. Verfahren gemäß einem der Ansprüche 2 bis 8, **dadurch gekennzeichnet, dass** die Menge der Hypohalogenite mindestens 5 mol-% bezüglich der AGU beträgt.

10. Verfahren gemäß einem der Ansprüche 2 bis 9, **dadurch gekennzeichnet, dass** die Menge der Di-t-alkylnitroxylradikalen mindestens 0,5 mol-% bezüglich AGU beträgt.

11. Verfahren gemäß einem der Ansprüche 1 bis 10, **dadurch gekennzeichnet, dass** das Fracturing-Fluid weiterhin mindestens ein Alkalimetallchlorid umfasst.

12. Verfahren gemäß einem der Ansprüche 1 bis 11, **dadurch gekennzeichnet, dass** das wässrige Fracturing-Fluid mindestens ein Tensid der allgemeinen Formel R¹⁰(OCH₂CH₂)ₓOH umfasst, wobei R¹⁰ für einen oder mehrere verschiedene lineare Alkylreste mit 8 bis 18 Kohlenstoffatomen steht und x für eine Zahl von 2 bis 30, und man das Tensid vor der Zugabe der Oxidationsmittel zugibt.

13. Verfahren gemäß einem der Ansprüche 1 bis 12, **dadurch gekennzeichnet, dass** man das wässrige Fracturing-Fluid herstellt, indem man eine Dispersion von Galactomannanen in einem Öl mindestens mit einer wässrigen Flüssigkeit, Proppants sowie den Oxidationsmitteln vermischt.

14. Verfahren gemäß Anspruch 13, **dadurch gekennzeichnet, dass** die Dispersion von Galactomannanen in einem Öl weiterhin mindestens ein Di-t-alkylnitroxylradikal umfasst, und man besagte Dispersion mindestens mit einer wässrigen Flüssigkeit, Proppants sowie einem Hypochlorit vermischt

15. Verfahren gemäß einem der Ansprüche 1 bis 14, **dadurch gekennzeichnet, dass** es sich bei den Galactomannanen um Guar handelt.

16. Verfahren zum Herstellung von Galactomannan-Gelen umfassend mindestens die folgenden Schritte
• Bereitstellen eines wässrigen Fluids umfassend mindestens eine wässrige Basis-Flüssigkeit und 0,1 bis 2 Gew. % mindestens eines Galactomannans, bezogen auf die Summe aller Komponenten des wässrigen Fluids,
• Zugabe eines Oxidationsmittels, welches die Galactomannane zu Carbonylgruppen aufweisenden Galactomannanen oxidieren kann, umfassend eine Kombination umfassend mindestens ein Hypochlorit und Di-t-alkylnitroxylradikale, mit der Maßgabe, dass der pH-Wert des wässrigen Fracturing-Fluids nach der Oxidation weniger als 7 beträgt.
